# EUROPEAN PATENT SPECIFICATION

(11) **EP 2 704 814 B1**
(45) Date of publication and mention of the grant of the patent: **21.02.2018**
(21) Application number: 12703928.7
(22) Date of filing: 26.01.2012
(51) Int. Cl.: C01B 13/10

(54) **PROCESS FOR RECONDITIONING A GAS FROM THE OZONOLYSIS OF AN UNSATURATED FATTY ACID**
VERFAHREN ZUM REKONDITIONIEREN VON EINEM GAS AUS DER OZONOLYSE EINER UNGESÄTTIGTEN FETTSÄURE
PROCÉDÉ DE RECONDITIONNEMENT D'UN GAZ PROVENANT DE L'OZONOLYSE D'UN ACIDE GRAS INSATURÉ

(30) Priority: 28.01.2011 US 201161437579 P
(43) Date of publication of application: 12.03.2014
(73) Proprietor: Emery Oleochemicals LLC, Cincinnati, OH 45232 (US)
(72) Inventor: WALKER, Thomas, Chad, Independence, KY 41051 (US)
(74) Representative: HGF Limited
(86) International application number: PCT/US2012/022689
(87) International publication number: WO 2012/103310

(56) References cited:
- EP-A2- 0 884 275
- WO-A1-94/11570
- CA-A1- 1 138 892
- GB-A- 883 531
- GB-A- 2 260 086
- JP-A- 55 003 333
- US-A- 4 287 130
- US-A- 4 430 306

## Description

### FIELD OF THE INVENTION

The present invention relates to a process for recycling a depleted gas from the ozonizing of an ethylenically unsaturated compound, and, more particularly, reusing in further ozonizing reactions a portion of the depleted gas after reconditioning.

### BACKGROUND OF THE INVENTION

Azelaic acid and pelargonic acid can be produced in commercial quantities via an oxidative cleavage of an alkenyl unit (i.e., double bond between two carbon atoms) in oleic acid. For example, azelaic acid has been prepared from oleic acid by oxidation with chromium sulfate. However, because stoichiometric use of chromium reagents is undesirable, a more efficient oxidation approach utilizing ozone was developed.

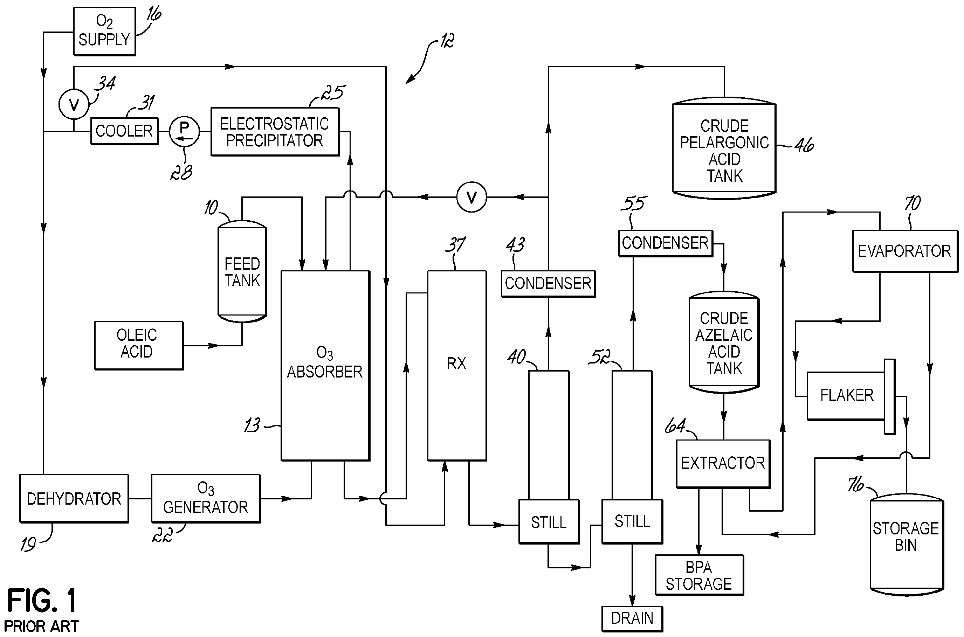

The basic process is best understood by referring to the description in the accompanying FIG. 1, which is a diagrammatic flow chart indicating the pieces of equipment used and their relationship in the ozonolysis process. This process involves reacting an ethylenically unsaturated compound, such as oleic acid, with ozone in an absorber column 13 to form an ozonide. The ozone is provided by a continuous closed system 12 that recirculates and recycles the ozone enriched gas. The ozonide is transferred from the absorber column 13 to one or more reaction chambers 37 where it is decomposed in the presence of additional oxygen and optional ozone to form a mixture of compounds including monobasic and dibasic acids, the mixture being referred to as mixed oxidation products (MOP). Monobasic acids and dibasic acids are then separated and individually processed in a series of stills 40 and 52, condensers 43 and 55, extractor 64, and evaporators 70 to remove compounds and undesired fractions among the range of molecular weights of monobasic and dibasic acids produced. The separated and purified monobasic and dibasic acids are then stored in storage tanks 46 and storage bins 76.

Ozonized gas is fed into the absorber 13 by a continuous closed system 12 through which the gas circulates. In the closed system 12, the gas is recycled, i.e., the gas is reconditioned for reuse multiple times in the absorber 13. The closed system 12 reconditions the gas by removing organic compounds and water from the gas, restoring the desired oxygen concentration, and generating the desired concentration of ozone. The closed system 12 maintains the desired predetermined oxygen concentration by bleeding off a small portion of the spent gas and replacing the bled off portion with fresh oxygen gas from an oxygen supply 16. The gas is then passed through a dehydrator 19 before being transferred to an ozone generator 22 which utilizes electricity to generate ozone. From the ozone generator 22, the ozone and oxygen mixture passes to the absorber 13 in which its ozone content is absorbed by the oleic acid as further explained below. From the absorber 13, the oxygen gas, now substantially devoid of ozone, passes to an electrostatic precipitator 25, which removes any contaminating fine mist organic compounds that may have been picked up in the absorber 13. The decontaminated oxygen gas then passes from the electrostatic precipitator 25 through a compression pump 28 to a cooler 31 before returning to the dehydrator 19, in which substantially all moisture is removed from the gas, thereby completing a pass through the closed system 12. Between the cooler 31 and dehydrator 19, a portion of the gas may be bled from the closed system 12 through a valve to one or more reaction chambers 37 for reaction with the ozonide to form the MOP. Various processes are described in the art. GB 883,531 describes a closed loop process for the production of ozonides from unsaturated fatty acids in the vapour phase. US 4,287,130 describes a process where the post-ozonisation oxygen containing gas is processed so that it can be fed back to the ozone generator. CA 1,138,892 A1 describes a process for purifying oxygen-containing recycled gas deriving from ozonisation of mono or polyunsaturated organic compounds.

While the process and apparatus described above generates organic acids such as azelaic and pelargonic acids from longer chain unsaturated organic acids such as oleic acid, deficiencies exist with respect to personnel safety, system efficiencies and equipment longevity. In particular, a gas containing a relatively high concentration of oxygen that is contaminated with organic compounds can foul the equipment used in the process and may explode if exposed to an ignition source. Thus, processes that improve the efficiency of removal of the organic compounds will improve operation efficiency by decreasing fouling of downstream equipment and improve safety by decreasing the risk of explosion. With regard to the explosion concern, it has been observed that electrostatic precipitators have caused explosions when used with oxygen gases that are contaminated with organic compounds. As such, new and improved processes and apparatus are needed.

### SUMMARY OF THE INVENTION

Described herein are processes and gas recycling systems useful for reconditioning a depleted gas from an absorber column in which an ozonizing reaction is conducted. The process is conducted in a closed system and includes the steps of removing organic compounds from the depleted gas, and compressing and drying the organic-free depleted gas. The process further includes reestablishing the desired ratio of oxygen to substantially non-reactive gas in the gas upstream of the ozone generator by removing a portion of the depleted gas and replacing the removed portion with a quantity of fresh oxygen gas, thereby forming a replenished gas. The replenished gas is then passed through an ozone generator to establish the desired ozone concentration thereby forming an ozone enriched gas. Finally, the ozone enriched gas is reintroduced into the absorber column for use in the ozonizing reaction.

### BRIEF DESCRIPTION OF THE DRAWINGS

FIG. 1 is a schematic representation of an oleic acid ozonolysis plant.
FIG. 2 is a schematic representation of an improved process for reconditioning an oxygen-containing gas from an ozonizing reaction in accordance with embodiments of the invention.
FIG. 3 is a schematic representation of a wet arrestor in accordance with embodiments of the invention.

### DETAILED DESCRIPTION OF THE INVENTION

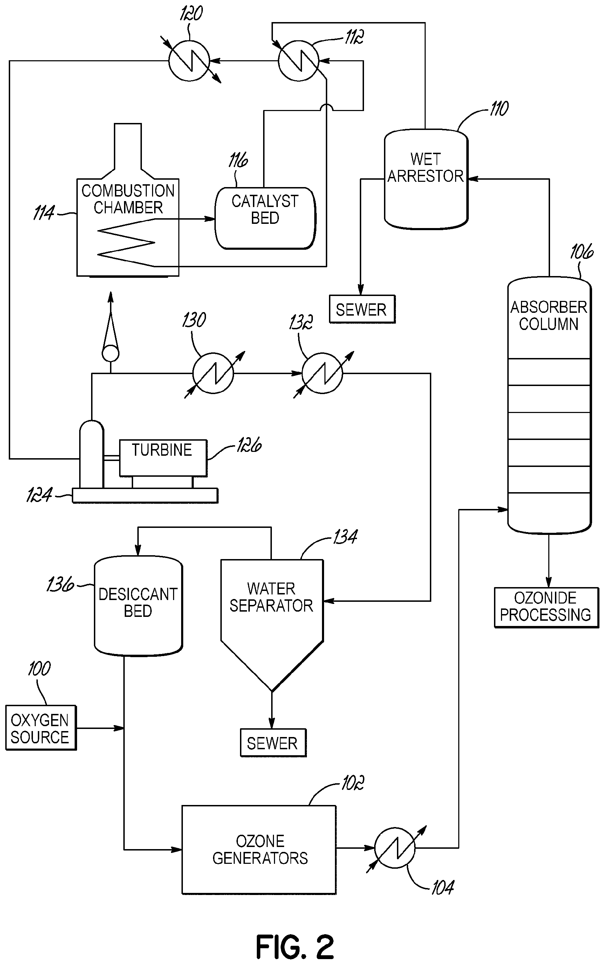

The gas recycling system is used to circulate and recondition depleted gas from an absorber column in which an ozonizing reaction is conducted. In the reaction, ozone is reacted with an unsaturated fatty acid, such as oleic acid, in the absorber column to form an ozonide of the fatty acid at the unsaturated bond. The ozonide leaves the absorber column and is oxidized in a series of oxidation reactions to yield a mixture of a dibasic acid, such as azaleic acid, and a monobasic acid, such as pelargonic acid. The desired monobasic and dibasic acids may be purified from by-products and each other in a series of distillation, extraction, and crystallization steps. The recycle gas system is useful to recondition the depleted gas from the absorber and as shown in Fig. 2, provides a significant improvement in efficiency and safety over the recycle gas system shown in Fig. 1.

In the present system, pure oxygen from an oxygen source 100 is combined with the depleted gas to establish a predetermined oxygen concentration with the balance of the gas being a gas or a mixture of gases that is substantially non-reactive in the ozonizing system. This gas is then fed into the ozone generators 102 where some of the oxygen is transformed into ozone by electrical discharge to form an ozone enriched gas. The ozone enriched gas contains about 0.5% to about 20% ozone and alternatively to about 2% to about 15%. The ozone-enriched gas may then be cooled by an ozone cooler 104 before going to the absorber column 106 where it is contacted in a counter-current flow with an unsaturated fatty acid such as oleic acid, converting the unsaturated fatty acid into an ozonide. During the ozonizing process that occurs in the absorber column, the ozone enriched gas is depleted of ozone and becomes contaminated with organic compounds and water.

When using oleic acid as the liquid reactant, exemplary organic compounds in the contaminated depleted gas include short chain monobasic acids having one to three carbons which may be in approximately the following concentrations: formic acid - about 40% to about 70%; acetic acid - about 15% to about 30%; propionic acid - about 4% to about 10%. Under some circumstances, the organic compounds in the contaminated depleted gas may also include small quantities, i.e., less than about 0.15% each, of the liquid reactant and desired products, i.e., oleic acid, pelargonic acid, and azaleic acid.

The organic compounds and water must be removed from the depleted gas before recycling the gas to the ozone generators 102. Organic compounds are typically removed from a gas by a combination of scrubbers and oxidizers. However, a gas having organic contaminants and a high concentration of oxygen is a significant explosion risk. To minimize the risk, the depleted gas is first passed through a wet arrestor 110 to prevent flashback from the oxidizer system to the absorber column 106. It was surprisingly discovered that the wet arrestor 110 performs the dual function of both preventing flashback to the absorber column 106 from downstream equipment, and removing organic compounds from the depleted gas. Typically, these two functions are performed by at least two pieces of equipment: 1) a flash arrestor to prevent flashback and 2) a scrubber or oxidizer system to remove organic compounds. The wet arrestor 110 not only performs both of these functions, but also cools the depleted gas and saturates the depleted gas with water vapor. Cooling the depleted gas improves the efficiency with which organic compounds are removed by the water in the wet arrestor 110 and saturation of the depleted gas with water vapor significantly lowers the risk of explosion of the organic contaminated depleted gas. The wet arrestor 110 is capable of performing these functions because the dimensions of the wet arrestor and its internal components are specially matched to the flow rate of the depleted gas and the operating conditions of the system.

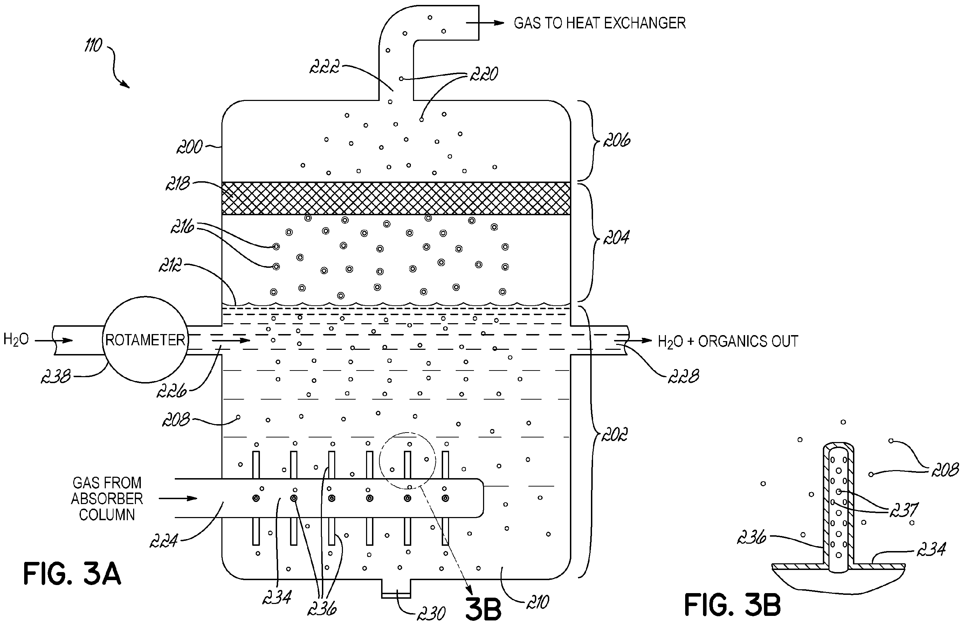

With reference to FIG. 3, the wet arrestor 110 includes a large pressurized container 200 having a lower portion 202, a middle portion 204, and an upper portion 206. Depleted gas enters the lower portion 202 of the pressurized container 200, which is filled with a volume of water 210, and passes through the volume of water 210. As the depleted gas passes through the volume of water 210 in the form of bubbles 208, a portion of the organic compounds passes both in the vapor phase and as discrete liquid droplets from the depleted gas into the volume of water 210 thereby removing this portion of organic compounds from the depleted gas. The portion of organic compounds that pass from the depleted gas to the volume of water 210 may include water soluble organic compounds that go into solution with the volume of water as well as water insoluble organic compounds that exist as a discrete phase in the volume of water.

As the depleted gas bubbles 208 reach the surface of the water 212, the depleted gas enters the middle portion 204 of the pressurized container 200 where the depleted gas 208 contains entrained droplets of liquid water 216. The depleted gas with entrained water 216 is pushed through the middle portion 204 of the pressurized container 200 by the positive pressure generated by the flow of depleted gas into the lower portion 202 of the chamber 200. At the upper end of the middle portion 204, the depleted gas with entrained water 216 passes through a demister pad 218 that removes the entrained water 216. The depleted gas less entrained water, shown as closed circles 220, exits the demister pad 218 into the upper portion 206 of the pressurized container 200 where it exits the pressurized container 200 through an exit 222 as a depleted gas albeit saturated with water vapor.

The lower portion 202 of the pressurized container 200, filled with a volume of water 210, includes a gas inlet 224, a water inlet 226, a water outlet 228, and a drain 230. The gas inlet 224 is configured so that the depleted gas is introduced as small bubbles 208 into the volume of water 210 in the lower portion 202. In one embodiment, the gas inlet 224 includes a gas distribution tube 234 that extends into the pressurized container 200 and a plurality of sparge lines 236 along the length of the gas distribution tube 234. The plurality of sparge lines 236 extends from the gas distribution tube 234 into the volume of water 210, and distributes the depleted gas into the volume of water 210 evenly from the gas inlet 224. Each of the plurality of sparge lines 236 includes a plurality of openings configured to allow the depleted gas to pass into the water 210 from the plurality of sparge lines 236. The openings in the sparge lines 236 have a length that typically ranges in size between about 0.1 inches (about 0.3 cm) to about 0.25 inches (about 0.8 cm) and a width perpendicular to the length that typically ranges in size between about 0.1 inches (about 0.3 cm) and about 0.25 inches (about 0.8 cm). A portion of the organic compounds passes from the depleted gas into the water as the bubbles 208 pass through the volume of water 210. The sizing and number of openings in the sparge lines 236 are adjusted to create a high surface area of bubble surface in the volume of water 210 to thereby more efficiently transfer the organic compounds to the volume of water 210.

The volume of water 210 above the plurality of sparge lines 236 is sufficient so that about 80% to about 90% of the organic compounds pass from the depleted gas into the volume of water 210. The volume of water 210 in the pressurized container 200 may be controlled by adjusting the flow of water into the pressurized container 200 through the water inlet 226, the flow of water out of the container through the water outlet 228, or both. The volume of water flowing into and out of the pressurized container 200 may be monitored such as with a rotameter 238. The flow of water into and out of the container 200 may be controlled, such as with a valve, so that the volume of water 210 into the container 200 is maintained at a level sufficient to prevent flashback to the absorber column 106 from downstream equipment, remove organic compounds from the depleted gas bubbling through the water, cool the depleted gas, and saturate the depleted gas with water vapor. The water outlet 228 allows water that includes removed soluble and insoluble organic compounds to exit the pressurized container 200. The volume of water exiting the pressurized container 200 through the water outlet 228 is approximately equal to the volume entering the pressurized container through the water inlet 226 thereby maintaining a generally constant volume of water 210. The flow of water into and out of the pressurized container 200 may be controlled to optimize the removal of organic compounds from the depleted gas. For example, if the volume of water passing into and out of the pressurized container is too low, then the water could become saturated with organic compounds or be warmed to an extent that decreases the efficiency with which compounds transfer from the depleted gas to the volume of water 210. The drain 230 may also be used to adjust the level of water in the pressurized container 200, but this typically remains closed except for maintenance or repair purposes.

As mentioned above, the depleted gas in the middle portion 204 of the pressurized container 200 will include entrained liquid droplets of water 216, which can include organic compounds in addition to water. The entrained water 216 is removed from the depleted gas by the demister pad 218 located at the upper edge of the middle portion 204 of the pressurized container 200. In one embodiment, the demister pad 218 has a thickness in a range between about 6 inches to about 12 inches (15, 24 cm to 30,48 cm), a width in a range between about 2 feet to about 6 feet (60,96 cm to 182,88 cm), and a length in a range between about 2 feet to about 6 feet (60,96 cm to 182,88 cm) when the thickness, the width, and the length measurements are made perpendicular to one another. The mesh pad is typically made of a non-reactive metal such as stainless steel and the mesh has a density sufficient to trap the entrained water 216 in the fibers of the mesh forming the demister pad 218. The entrained water 216 becomes entrapped in the fibers of the mesh due to the velocity of the depleted gas through the demister pad 218. If the velocity is too low, then a portion of the water entrained 216 in the depleted gas can pass through the demister pad 218 without being trapped by the mesh of the demister pad 218. If the velocity of the depleted gas is too high, then the water entrained 216 in the depleted gas will blow through the demister pad 218 or can be blown off the pad after being originally entrapped. Generally, the velocity of the depleted gas passing through the demister pad 218 ranges between about 2 feet/sec and about eleven feet/sec (0,61 m/sec and 3,35 m/sec). The water droplets trapped in the demister pad drop back into the volume of water 210 in the lower portion 202 of the pressurized container 200 where the water will eventually exit the container 200 via the water outlet 228.

In some embodiments, the water vapor saturated depleted gas is next passed into a heat exchanger 112 and heated up to about 600 °F (316°C) The heat exchanger 112 transfers residual heat into the gas from the downstream combustion and catalyst processes, described in further detail below.

The water-saturated depleted gas is then introduced into a combustion chamber 114 and further heated in the combustion chamber 114 for removal of 90% to about 99% of the remaining organic compounds via oxidation of those compounds, in a catalytic oxidizer system, a thermal oxidizer system, or a combination of the two systems.

For the catalytic oxidizer system, the water-saturated depleted gas is heated to a temperature of at least about 600°F (316°C) or alternatively in a range between about 600°F to about 850°F (316°C to 454°C) before being passed through a catalyst bed 116, which catalyzes the degradation of about 90% to about 99% of the remaining organic compounds into water and carbon dioxide. The catalytic oxidizer 116 has the added benefit of converting carbon monoxide emitted from the ozone generators 102 into carbon dioxide thereby preventing the unsafe build-up of potentially explosive carbon monoxide in the closed system 12. The catalyst bed 116 contains a commercially available rare earth oxidation catalyst, such as a palladium, platinum, molybdenum, rhodium, technetium, ruthenium, tantalum, tungsten, rhenium, osmium, iridium, and combinations thereof on a substrate such as a standard silicon honeycomb. The catalyst blocks can be standard sized blocks as is known in the art.

For a thermal oxidizer system, the water vapor-saturated depleted gas is heated in a combustion chamber 114 to temperatures sufficient to oxidize between about 90% to about 99% of the organic compounds. In this embodiment the water-saturated depleted gas is heated to at least about 850°F (454°C) or, alternatively, at least about 2000°F.

After passing through the oxidizer system, the water-saturated depleted gas is passed through a water removal system. The water removal system cools the water vapor-saturated depleted gas with a cooling system to aid the removal of the water vapor. The cooling system may include a heat exchanger 112, a blower precooler 120, a blower 124, a water cooler 130, a gas chiller 132, a water separator 134, and a desiccant bed 136.

The heat exchanger 112 cools the water-saturated depleted gas to below about 300°F (149°C), as described above. The blower precooler 120 further cools the water-saturated depleted gas to below about 120°F (49°C).

The water vapor-saturated depleted gas is then compressed in blower 124. In an exemplary embodiment, the blower 124 may be driven by a turbine 126, which may in turn be powered by an electric motor, high pressure steam, or some other power device. The pressure of the depleted gas entering blower 124 is about 1.5 psig (10342 Pa). The blower 124 increases the pressure of the depleted gas to at least about 10 psig (68948 Pa), or alternatively to a range between about 15 psig and about 20 psig (103421 Pa and 137895 Pa).

The compressed depleted gas is cooled with cooling water in a gas cooler 130 to below about 120°F (49°C), or alternatively to about 100°F (38°C). The compressed oxygen-depleted gas is further cooled using a refrigerant to less than 50°F (10°C), or alternatively to about 35°F (2°C), in a gas chiller 132. The refrigerated depleted gas passes then through a water separator 134 where most of the water, i.e., about 80% to about 90%, is removed. The depleted gas at this stage has a relative humidity that corresponds to a dew point below about -30°F (-34°C), or alternatively below about -40°F (-40°C). About 99% of the remaining water is removed by passing the depleted gas through a desiccant bed 136. The desiccant bed may be, for example, activated alumina, silica gel, or other desiccants as are known in the art. The depleted gas at this stage has a relative humidity corresponding to a dew point below about -50°F (-45°C) or alternatively to about -60°F (-51°C).

After the removal of organic compounds and water vapor from the depleted gas, the oxygen and ozone concentrations of the depleted gas are replenished in a replenishing system. First, a portion of the depleted gas is removed from circulation through a valve where it may be vented into the atmosphere or used in another process. Then, the removed portion of gas is replaced with a quantity of fresh oxygen from the oxygen supply 100 sufficient to achieve the desired oxygen concentration of from about 10% to about 99.9% with the balance being a gas or mixture of gases that is substantially non-reactive in the ozonizing reaction or the ozonolysis system. The gas having been restored to the desired oxygen concentration is referred to as replenished gas. The fresh oxygen has an oxygen concentration that is sufficient to achieve the desired oxygen concentration in the replenished gas. In one embodiment, the fresh oxygen is a pure oxygen gas having at least 99% oxygen.

The replenished gas is then passed through an ozone generator 102 to form an ozone enriched gas. The ozone enriched gas has an ozone concentration of about 0.5% to about 20% and alternatively to about 2% to about 15%. The ozone enriched gas may then be cooled in the ozone gas cooler 104 before being reintroduced into the absorber column 106 through an absorber column access valve.

The gas recycling system and methods described herein may be useful to recycle gas from the ozonizing of unsaturated acids. As mentioned above, the gas recycling system is particularly suited for use with an ozonolysis system that breaks down oleic acid into pelargonic acid and azelaic acid. However, the gas recycling system may be useful to recycle the gas used to break down other unsaturated acids into component carbon chains which form monobasic and dibasic acids via the ozonolysis reaction, or even other ethylenically unsaturated materials which do not contain carboxyl functionality. The unsaturated acids may generally have between 8 and 30 carbon atoms and one or more unsaturated carbon to carbon bonds. The monobasic and dibasic acid products that result from the ozonolysis reaction are determined by the location of the one or more unsaturated carbon to carbon bonds in the unsaturated acid. The unsaturated acids may be isolated from biological sources, such as plants, animals, or microorganisms. Alternatively, the unsaturated acids may be isolated from petroleum sources and synthetic sources. Exemplary mono unsaturated acids and their respective potential oxidation products are included in the Table below.

| Carbons | Exemplary Unsaturated Fatty Acid | Exemplary Monobasic Product | Exemplary Dibasic Product |
|---|---|---|---|
| 10 | Obtusilic acid | Caproic acid | Succinic acid |
| 10 | Caproleic acid | Formic acid | Azelaic acid |
| 11 | Undecenoic acid | Formic acid | Sebacic acid |
| 12 | Lauric acid | Propionic acid | Azelaic acid |
| 14 | Myristoleic acid | Valeric acid | Azelaic acid |
| 16 | Palmitoleic acid | Heptanoic acid | Azelaic acid |
| 18 | Petroselinic acid | Lauric acid | Adipic acid |
| 18 | Oleic acid | Pelargonic acid | Azelaic acid |
| 18 | Vaccenic acid | Heptanoic acid | Hendecanedioic acid |
| 18 | Octadecenoic acid | Caproic acid | Dodecanedioic acid |
| 20 | Gadoleic acid | Undecanoic acid | Azelaic acid |
| 22 | Cetoleic acid | Undecanoic acid | Hendecanedioic acid |
| 22 | Erucic acid | Pelargonic acid | Brassylic acid |
| 24 | Selacholeic acid | Pelargonic acid | Pentadecanedioic acid |
| 26 | Hexacosenoic acid | Pelargonic acid | Heptadecanedioic acid |
| 30 | Tricosenoic acid | Pelargonic acid | Heneicosanedioic acid |

While the list above includes monounsaturated acids, it is understood that polyunsaturated acids could be utilized as well. The resulting monobasic acids and dibasic acids, and their respective derivatives, may be used for a number of different purposes such as in the preparation of lubricant base stocks, plasticizers, lacquers, herbicides, skin treatments, textile coning oils, flotation agents for mineral refining, fragrances, catalyst scavengers, corrosion inhibitors, metal cleaners, polymerization initiators, lithium complex greases, epoxy flexibilizers, thermosetting unsaturated polyester resins, polyamide hot melts, urethane elastomers, and elastomeric fibers, wire coatings and molding resins.

## Claims

1. A process for reconditioning a depleted gas from the production of an ozonide from an ethylenically unsaturated compound, comprising the steps of
contacting an ethylenically unsaturated compound with an ozone enriched gas in an absorber column to form an ozonide and a depleted gas, wherein the depleted gas is depleted of ozone and is contaminated with organic compounds; and
reconditioning the depleted gas from the absorber column to form the ozone enriched gas for reuse in the absorber column,
the reconditioning process comprising:
a process for removing organic compounds from the depleted gas, the process comprising:
introducing water vapour into the depleted gas and removing a portion of the organic compounds from the depleted gas in a wet arrestor; and
removing a portion of the residual organic compounds in the depleted gas in an oxidizer;
removing a portion of the water vapour from the depleted gas;
re-establishing a desired oxygen concentration in the depleted gas;
replenishing a desired ozone concentration in the depleted gas to form an ozone enriched gas; and
introducing the ozone enriched gas to the absorber column.

2. The process of claim 1 wherein the oxidizer is one of a thermal oxidizer, a catalytic oxidizer, and combinations thereof.

3. The process of one of the claims 1 to 2 wherein the depleted gas is heated to a temperature of at least 316°C (600°F) for the oxidiser.

4. The process of one of claims 1 to 3 wherein the removing a portion of water from the depleted gas comprises:
compressing the depleted gas in a gas compressor;
decreasing the temperature of the depleted gas in a cooling system;
lowering the relative humidity of the depleted gas in a drying unit;
wherein the pressure of the depleted gas is increased to at least 68948 Pa (10 psig) in the gas compressor; and
wherein the cooling system includes a gas chiller that decreases temperature of the depleted gas to below 10°C (50°F).

5. The process of claim 4 wherein the drying system includes a water separator that removes the water condensed in the water cooler and gas chiller to remove 80% to 90% of the water from the gas stream; and wherein the drying system includes a desiccant bed that decreases the relative humidity of the oxygen depleted gas to correspond with a dew point of below -45°C (-50°F) at a pressure of 103421Pa (15 psig).

6. The process of one of claims 1 to 5 wherein the desired concentration of oxygen in the depleted gas is replenished by removing a portion of the depleted gas and replacing the removed portion with a quantity of fresh oxygen gas; and wherein the desired ozone concentration is replenished by passing the depleted gas through an ozone generator to form the ozone enriched gas.

7. A system for removing organic compounds from a depleted gas from an absorber column in which an ozonizing reaction is conducted, the system comprising in fluid communication with the absorber column:
a wet arrestor configured to receive the depleted gas from the absorber column and to introduce water vapor to and remove a portion of the organic compounds from the depleted gas; and
an oxidizer configured to remove a residual portion of the organic compounds from the depleted gas wherein the oxidizer includes at least one of a thermal oxidizer and a catalytic oxidizer.

8. A system for reconditioning a depleted gas from an absorber column in which an ozonizing reaction is conducted, the system comprising in fluid communication with the absorber column:
a wet arrestor configured to receive the depleted gas from the absorber column and to introduce water vapor to and remove a portion of organic compounds from the depleted gas;
a combustion chamber configured to receive the depleted gas from the wet arrestor and to combust a portion of the organic compounds in the water vapor containing depleted gas;
a catalyst bed configured to receive the depleted gas from the combustion chamber and to catalyze the degradation of a portion of the organic compounds from the water vapor containing depleted gas;
a gas compressor configured to receive the depleted gas vented from the catalyst bed and to compress the depleted gas;
a cooling system configured to receive the compressed depleted gas and to lower the temperature of the depleted gas;
a drying unit configured to receive the cooled depleted gas and to lower the relative humidity of the depleted gas; and
an ozone generator.

## Patentansprüche

1. Verfahren zum Rekonditionieren eines abgereicherten Gases aus der Herstellung eines Ozonids von einer etyhlenisch ungesättigten Verbindung, umfassend die folgenden Schritte:
Inkontaktbringen einer ethylenisch ungesättigten Verbindung mit einem mit Ozon angereicherten Gas in einer Absorptionssäule, um ein Ozonid und ein abgereichertes Gas zu bilden, wobei das abgereicherte Gas an Ozon abgereichert wird und mit organischen Verbindungen kontaminiert wird; und
Rekonditionieren des abgereicherten Gases aus der Absorptionssäule, um das mit Ozon angereicherte Gas zum Wiederverwenden in der Absorptionssäule zu bilden,
wobei das Rekonditionierungsverfahren Folgendes umfasst:
ein Verfahren zum Entfernen von organischen Verbindungen aus dem abgereicherten Gas, wobei das Verfahren Folgendes umfasst:
Einleiten von Wasserdampf in das abgereicherte Gas und Entfernen eines Teils der organischen Verbindungen aus dem abgereicherten Gas in einem Behälter zur Gasreinigung; und
Entfernen eines Teils der Restgehalte organischer Verbindungen in dem abgereicherten Gas in einem Oxidator;
Entfernen eines Teils des Wasserdampfes aus dem abgereicherten Gas;
Wiederherstellen einer gewünschten Sauerstoffkonzentration in dem abgereicherten Gas;
Nachfüllen einer gewünschten Ozonkonzentration in dem abgereicherten Gas, um ein mit Ozon angereichertes Gas zu bilden; und
Einleiten des mit Ozon angereicherten Gases in die Absorptionssäule.

2. Verfahren nach Anspruch 1, wobei der Oxidator ein thermischer Oxidator, ein katalytischer Oxidator und Kombinationen davon ist.

3. Verfahren nach einem der Ansprüche 1 bis 2, wobei das abgereicherte Gas für den Oxidator auf eine Temperatur von zumindest 316 °C (600 °F) erwärmt wird.

4. Verfahren nach einem der Ansprüche 1 bis 3, wobei das Entfernen eines Teils des Wassers aus dem abgereicherten Gas Folgendes umfasst:
Verdichten des abgereicherten Gases in einem Gasverdichter;
Verringern der Temperatur des abgereicherten Gases in einem Kühlsystem;
Absenken der relativen Luftfeuchte des abgereicherten Gases in einer Trocknungseinheit;
wobei der Druck des abgereicherten Gases auf zumindest 68948 Pa (10 psig) in dem Gasverdichter erhöht wird; und
wobei das Kühlsystem eine Gaskältemaschiene enthält, die die Temperatur des abgereicherten Gases auf unter 10 °C (50 °F) absenkt.

5. Verfahren nach Anspruch 4, wobei das Trocknungssystem einen Wasserabscheider enthält, der das im Wasserkühler und in der Gaskältemaschine kondensierte Wasser entfernt, um 80 % bis 90 % des Wassers aus dem Gasstrom zu entfernen; und wobei das Trocknungssystem ein Trockenmittelbett enthält, das die relative Luftfeuchte des an Sauerstoff abgereicherten Gases senkt, um dem Taupunkt von unter -45 °C (-50 °F) bei einem Druck von 103421 Pa (15 psig) zu entsprechen.

6. Verfahren nach einem der Ansprüche 1 bis 5, wobei die gewünschte Sauerstoffkonzentration in dem abgereicherten Gas durch Entfernen eines Teils des abgereicherten Gases und durch Ersetzen des entfernen Teils durch eine Menge an frischem Sauerstoffgas nachgefüllt wird; und wobei die gewünschte Ozonkonzentration durch Durchlaufen des abgereicherten Gases durch einen Ozongenerator nachgefüllt wird, um das mit Ozon angereicherte Gas zu bilden.

7. System zum Entfernen von organischen Verbindungen aus einem abgereicherten Gas aus einer Absorptionssäule, in der eine Ozonisierungsreaktion durchgeführt wird, wobei das System Folgendes, das in Fluidverbindung mit der Absorptionssäule steht, umfasst:
einen Behälter zur Gasreinigung, der zum Empfangen des abgereicherten Gases aus der Absorptionssäule und zum Einleiten von Wasserdampf in und zum Entfernen eines Teils der organischen Verbindungen aus dem abgereicherten Gas konfiguriert ist, und
einen Oxidator, der zum Entfernen eines Restgehalts der organischen Verbindungen aus dem abgereicherten Gas konfiguriert ist, wobei der Oxidator zumindest einen thermischen Oxidator und einen katalytischen Oxidator enthält.

8. System zum Rekonditionieren eines abgereicherten Gases aus einer Absorptionssäule, in der eine Ozonisierungsreaktion durchgeführt wird, wobei das System Folgendes, das in Fluidverbindung mit der Absorptionssäule steht, umfasst:
einen Behälter zur Gasreinigung, der zum Empfangen des abgereicherten Gases aus der Absorptionssäule und zum Einleiten von Wasserdampf in und zum Entfernen eines Teils der organischen Verbindungen aus dem abgereicherten Gas konfiguriert ist;
eine Brennkammer, die zum Empfangen des abgereicherten Gases aus dem Behälter zur Gasreinigung und zum Verbrennen eines Teils der organischen Verbindungen in dem Wasserdampf beinhaltenden abgereicherten Gas konfiguriert ist;
ein Katalysatorbett, das zum Empfangen des abgereicherten Gases aus der Brennkammer und zur Katalyse des Abbaus eines Teils der organischen Verbindungen von dem Wasserdampf beinhaltenden abgereicherten Gas konfiguriert ist;
einen Gasverdichter, der zum Empfangen des abgereicherten Gases, das aus dem Katalysatorbett austritt, und zum Verdichten des abgereicherten Gases konfiguriert ist;
ein Kühlsystem, das zum Empfangen des verdichteten abgereicherten Gases und zum Absenken der Temperatur des abgereicherten Gases konfiguriert ist;
eine Trocknungseinheit, die zum Empfangen des gekühlten Gases und zum Absenken der relativen Luftfeuchte des abgereicherten Gases konfiguriert ist; und
einen Ozongenerator.

## Revendications

1. Procédé pour régénérer un gaz appauvri par la production d'un ozonide à partir d'un composé éthylénique insaturé, comprenant les étapes:
mettre en contact un composé éthylénique insaturé avec un gaz enrichi en ozone dans une colonne d'absorption pour former un ozonide et un gaz appauvri, le gaz appauvri étant appauvri en ozone et étant contaminé par des composés organiques ; et
régénérer le gaz appauvri provenant de la colonne d'absorption pour former le gaz enrichi en ozone devant être réutilisé dans la colonne d'absorption,
le procédé de régénération comprenant :
un procédé pour enlever les composés organiques du gaz appauvri, le procédé comprenant :
l'introduction de vapeur d'eau dans le gaz appauvri et l'enlèvement d'une partie des composés organiques du gaz appauvri dans une colonne d'arrêt à eau ; et
l'enlèvement d'une partie des composés organiques résiduels dans le gaz appauvri dans un oxydateur ;
l'enlèvement d'une partie de la vapeur d'eau du gaz appauvri ;
le rétablissement d'une concentration d'oxygène voulue dans le gaz appauvri ;
la restauration d'une concentration d'ozone voulue dans le gaz appauvri pour former un gaz enrichi en ozone ; et
l'introduction du gaz enrichi en ozone dans la colonne d'absorption.

2. Procédé selon la revendication 1, dans lequel l'oxydateur est l'un de : un oxydateur thermique, un oxydateur catalytique et des combinaisons de ceux-ci.

3. Procédé selon l'une quelconque des revendications 1 à 2, dans lequel le gaz appauvri est chauffé à une température d'au moins 316°C (600°F) pour l'oxydateur.

4. Procédé selon l'une des revendications 1 à 3, dans lequel l'enlèvement d'une partie de l'eau du gaz appauvri comprend :
la compression du gaz appauvri dans un compresseur de gaz ;
la diminution de la température du gaz appauvri dans un système de refroidissement ;
l'abaissement de l'humidité relative du gaz appauvri dans une unité de séchage ;
la pression du gaz appauvri étant augmentée jusqu'à au moins 68948 Pa (10 psig) dans le compresseur de gaz ; et
le système de refroidissement comprenant un refroidisseur de gaz qui abaisse la température du gaz appauvri à moins de 10°C (50°F).

5. Procédé selon la revendication 4, dans lequel le système de séchage comprend un séparateur d'eau qui enlève l'eau condensée dans le refroidisseur d'eau et le refroidisseur de gaz pour enlever 80 % à 90 % de l'eau du courant de gaz ; et dans lequel le système de séchage comprend un lit déshydratant qui abaisse l'humidité relative du gaz appauvri en oxygène pour qu'elle corresponde à un point de rosée en dessous de -45°C (-50°F) à une pression de 103421 Pa (15 psig).

6. Procédé selon l'une des revendications 1 à 5, dans lequel la concentration voulue d'oxygène dans le gaz appauvri est rétablie par enlèvement d'une partie du gaz appauvri et remplacement de la partie enlevée par une quantité d'oxygène gazeux frais ; et dans lequel la concentration d'ozone voulue est rétablie par passage du gaz appauvri dans un générateur d'ozone pour former le gaz enrichi en ozone.

7. Système pour enlever les composés organiques d'un gaz appauvri provenant d'une colonne d'absorption dans laquelle a lieu une réaction ozonisante, le système comprenant, en communication fluide avec la colonne d'absorption :
une colonne d'arrêt à eau configurée pour recevoir le gaz appauvri de la colonne d'absorption et pour introduire la vapeur d'eau dans le gaz appauvri et enlever de celui-ci une partie des composés organiques ; et
un oxydateur configuré pour enlever une partie résiduelle des composés organiques du gaz appauvri, l'oxydateur comprenant au moins l'un de : un oxydateur thermique et un oxydateur catalytique.

8. Système pour régénérer un gaz appauvri provenant d'une colonne d'absorption dans laquelle a lieu une réaction ozonisante, le système comprenant, en communication fluide avec la colonne d'absorption :
une colonne d'arrêt à eau configurée pour recevoir le gaz appauvri de la colonne d'absorption et pour introduire de la vapeur d'eau dans le gaz appauvri et enlever de celui-ci une partie des composés organiques ;
une chambre de combustion configurée pour recevoir le gaz appauvri de la colonne d'arrêt à eau et brûler une partie des composés organiques dans le gaz appauvri contenant des la vapeur d'eau ;
un lit catalytique configuré pour recevoir le gaz appauvri de la chambre de combustion et catalyser la dégradation d'une partie des composés organiques du gaz appauvri contenant de la vapeur d'eau ;
un compresseur de gaz configuré pour recevoir le gaz appauvri libéré du lit catalytique et pour comprimer le gaz appauvri ;
un système de refroidissement configuré pour recevoir le gaz appauvri comprimé et pour abaisser la température du gaz appauvri ;
une unité de séchage configurée pour recevoir le gaz appauvri refroidi et pour abaisser l'humidité relative du gaz appauvri ; et
un générateur d'ozone.
